(19) Europäisches Patentamt
European Patent Office
Office européen des brevets

(11) **EP 3 347 248 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(21) Anmeldenummer: **16765944.0**

(22) Anmeldetag: **06.09.2016**

(51) Int Cl.:
*B60T 8/172* (2006.01)       *B60T 8/1755* (2006.01)
*B60T 8/88* (2006.01)

(86) Internationale Anmeldenummer:
**PCT/EP2016/070900**

(87) Internationale Veröffentlichungsnummer:
**WO 2017/042138 (16.03.2017 Gazette 2017/11)**

(54) **VERFAHREN UND VORRICHTUNG ZUM FESTSTELLEN EINER ORIENTIERUNG EINER SENSOREINHEIT**

METHOD AND DEVICE FOR ASCERTAINING AN ORIENTATION OF A SENSOR UNIT

PROCÉDÉ ET DISPOSITIF POUR ÉTABLIR UNE ORIENTATION D'UNE UNITÉ DE DÉTECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2015 DE 102015115282**

(43) Veröffentlichungstag der Anmeldung:
**18.07.2018 Patentblatt 2018/29**

(73) Patentinhaber: **KNORR-BREMSE Systeme für Nutzfahrzeuge GmbH**
**80809 München (DE)**

(72) Erfinder:
• JUNDT, Oliver
74394 Hessigheim (DE)
• HERGES, Michael
80935 München (DE)
• HECKER, Falk
71706 Markgröningen (DE)
• VORREITER, Martin
71665 Vaihingen (DE)

(56) Entgegenhaltungen:
WO-A1-00/17607          DE-A1- 10 260 848
DE-A1-102005 033 237    DE-A1-102011 121 822
US-B1- 6 308 134

**Beschreibung**

Die vorliegende Erfindung bezieht sich auf ein Verfahren und eine Vorrichtung zum Feststellen einer Orientierung einer Sensoreinheit und insbesondere auf ein Verfahren und eine Vorrichtung zur schnellen Erkennung von Einbaurichtungen von ESP-Einheiten.

ESP-Einheiten (ESP = Elektronisches Stabilitätsprogramm) sind Fahrassistenzsysteme, die abnorme Fahrzeuglagen feststellen und, basierend darauf, entsprechende Gegenreaktionen veranlassen. Um ihre Funktion zu erfüllen, besitzen ESP-Einheiten typischerweise zumindest einen Gierraten- und einen Querbeschleunigungssensor. Diese Sensoren bilden eine Sensoreinheit. Bei gegenwärtig üblichen ESP-Einheiten muss diese Sensoreinheit mit einer bestimmten Richtungsorientierung in dem Fahrzeug verbaut sein. Nur dann kann sie ordnungsgemäß funktionieren und etwaige abnorme Querbeschleunigungen können eindeutig von normalen Fahrzeuglängsbeschleunigungen oder Bremsvorgängen unterschieden werden.

Wegen der Bedeutung des ESPs ist es daher erforderlich, dessen Einbau zu überprüfen, um so zuverlässig zu gewährleisten, dass das ESP ordnungsgemäß und nicht aus Versehen verkehrt herum eingesetzt wurde.

Um die Orientierung der Sensoreinheit zu überprüfen, wird bei heutigen Systemen ein Verfahren angewandt, bei welchem zumindest eine Kurvenfahrt erforderlich ist, um so Giergeschwindigkeiten des Fahrzeuges aus mehreren Sensorsignalen unabhängig voneinander zu berechnen. Dabei wird geprüft, ob die Gierraten, die aus verschiedenen Eingangswerten berechnet werden, innerhalb gewisser Toleranzen und insbesondere in ihrem Vorzeichen übereinstimmen. Ein solches Verfahren ist in dem Dokument EP 1 118 519 beschrieben, wobei gemäß dem beschriebenen Verfahren das Fahrzeug zumindest eine Kurvenfahrt absolviert, um die Messung durchzuführen. Diese Vorgehensweise ist zunächst aufwendig, da eine entsprechende Teststrecke mit einer ausreichenden Kurve vorhanden sein muss. Außerdem birgt sie das Risiko, dass bei Zwischenfällen bereits bei der ersten Kurvenfahrt ein ESP-Eingriff erforderlich sein könnte, obwohl das ESP noch nicht geprüft ist. Schließlich kann eine eventuell notwendige Fehlerwarnung wegen der möglichen falschen Einbaulage erst in oder nach der ersten Kurvenfahrt erfolgen, was den Fahrer von seiner Fahrtätigkeit ablenkt. Um dies zu vermeiden, besteht ein Bedarf nach alternativen Möglichkeiten zur zuverlässigen Einbauüberprüfung einer ESP-Einheit in einem Fahrzeug.

Ein konventionelles Verfahren zur Kalibrierung von Beschleunigungssensoren in Navigationssystemen ist in der WO 00/17607 offenbart.

Konventionelle Verfahren zur Bestimmung der Einbaurichtung von einer Sensoreinheit sind in der DE 10 2005 033 237 A1 und DE 10 2011 121 822 A1 offenbart.

Der vorliegenden Erfindung liegt die Aufgabe zugrunde, ein Verfahren und eine Vorrichtung zum Feststellen einer Orientierung einer Sensoreinheit bzw. zum Feststellen einer Einbaurichtung einer ESP-Einheit bereitzustellen, die die oben genannten Nachteile nicht aufweisen und insbesondere eine risikoarme Überprüfung der Orientierung ermöglichen.

Diese Aufgabe wird durch ein Verfahren nach Anspruch 1 oder Anspruch 4 und durch eine Vorrichtung nach Anspruch 8 gelöst. Die abhängigen Ansprüche beziehen sich auf weitere vorteilhafte Ausgestaltungen der Gegenstände der unabhängigen Ansprüche.

Die vorliegende Erfindung betrifft insbesondere ein erstes Verfahren zum Feststellen einer Einbaurichtung einer ESP-Einheit, wobei die ESP-Einheit zumindest einen Beschleunigungssensor aufweist und in einem Fahrzeug eingebaut ist. Das erste Verfahren umfasst die Schritte: Erfassen eines ersten Sensorsignals von dem Beschleunigungssensor in einem beschleunigungsfreien Zustand (z.B. Stillstand oder Ruhezustand) des Fahrzeuges; Erfassen eines zweiten Sensorsignals von dem Beschleunigungssensor in Antwort auf eine Linearbeschleunigung des Fahrzeuges; und Ermitteln der Einbaurichtung der ESP-Einheit relativ zu dem Fahrzeug basierend auf dem ersten Sensorsignal und dem zweiten Sensorsignal.

Die genannte Reihenfolge der Schritte (auch der weiteren Schritte) impliziert keine zeitliche Abfolge oder nur insoweit, wie es zwingend erforderlich ist. Beispielsweise kann zunächst das erste Sensorsignal erfasst werden und danach erfolgt die Erfassung des zweiten Sensorsignals (d.h. der Beschleunigung). Es kann aber auch zunächst beschleunigt und das zweite Sensorsignal erfasst werden und anschließend wird das erste Sensorsignal erfasst.

Unter einer Orientierung der Sensoreinheit ist deren räumliche Ausrichtung in Bezug auf ein Koordinatensystem des Fahrzeuges zu verstehen, so dass bei bekannter Orientierung Sensorsignale wie beispielsweise ein Beschleunigungswert in einer bestimmten Richtung eindeutig einer Fahrzeugrichtung (z.B. einer Fahrzeuglängsrichtung, einer Vertikalrichtung oder einer Fahrzeugquerrichtung) zugeordnet werden kann. Somit kann die Sensoreinheit entsprechend geeicht, aber auch ein falscher Einbau festgestellt werden.

Der Begriff "Erfassen von Sensorsignalen" wird im Rahmen der vorliegenden Erfindung breit ausgelegt und umfasst nicht nur das Auslesen eines entsprechenden Sensorsignals, sondern ebenfalls ein Abfragen oder ein einfaches Empfangen von Sensorsignalen, die beispielsweise von einer Steuereinheit bereitgestellt werden.

Der beschleunigungsfreie Zustand oder der Ruhezustand kann allgemein als ein Zustand definiert werden, in dem auf das Fahrzeug nur die Erdbeschleunigung wirkt, d.h. das Fahrzeug kann entweder stehen oder sich mit einer konstanten, geradlinigen Geschwindigkeit bewegen oder einfach ausrollen.

Die Linearbeschleunigung kann sich sowohl auf eine Geschwindigkeitszunahme als auch auf eine Geschwindigkeitsabnahme (d.h. Bremsen) beziehen. Somit kann der Ruhezustand bei einer Bewegung mit konstanter, von Null verschiedenen, Geschwindigkeit vermessen werden und bei einem anschließenden Abbremsen wird das zweite Sensorsignal erfasst.

Sofern nicht eindeutig darauf hingewiesen wird, soll in der vorliegenden Beschreibung eine parallele Ausrichtung auch den Fall der antiparallelen Ausrichtung mit einschließen (d.h. Geraden, die nicht parallele sind, sind auch nicht antiparallel).

Die oben genannte Aufgabe wird durch die vorliegende Erfindung dadurch gelöst, dass ein erstes Sensorsignal genutzt wird, um eine Vertikalrichtung anhand der Gravitationsbeschleunigung zu finden oder zu definieren, und das zweite Sensorsignal (ein Beschleunigungswert) während einer Linearbeschleunigung genutzt wird, um eine Längsrichtung des Fahrzeuges mit der Richtung der Linearbeschleunigung zu definieren bzw. um eine potentielle Verdrehung um die Vertikalachse festzustellen.

Die Sensoreinheit kann insbesondere in oder an einer ESP-Einheit angeordnet sein, so dass ebenfalls die Orientierung der ESP-Einheit bekannt ist, wenn die Sensoreinheit entsprechend vermessen wurde. Um beispielsweise Gierraten-Sensoren in der ESP-Einheit zu eichen, ist somit keine Kurvenfahrt erforderlich, da mit der Feststellung der Orientierung der Sensoreinheit ebenfalls eine Orientierung der in der ESP-Einheit vorhandenen Sensoren wie beispielsweise dem Gierraten-Sensor bekannt sind. Der Ruhezustand kann wie gesagt bereits vor dem Anfahren des Fahrzeuges untersucht werden, so dass durch ein einfaches Beschleunigen des Fahrzeuges auf einer relativ kurzen Strecke bereits festgestellt werden kann, ob die beispielhafte ESP-Einheit korrekt eingebaut wurde.

Der genutzte Beschleunigungssensor kann Sensorsignale für eine erste Beschleunigungsachse, eine zweite Beschleunigungsachse und eine dritte Beschleunigungsachse ausgeben und das Fahrzeug definiert eine Längsachse, eine Querachse und eine Vertikalachse, wobei die Vertikalachse parallel zu einem Erdbeschleunigungsvektor liegt und die Längsachse parallel zu der Linearbeschleunigung liegt. Mit diesen Definitionen kann der Schritt des Ermittelns weiter Folgendes umfassen: Aus dem ersten Sensorsignal wird ein erster Winkel einer Drehung um die Längsachse und ein zweiter Winkel einer Drehung um die Querachse ermittelt. Der erste Winkel und der zweite Winkel sind dadurch definiert, dass die zugehörigen Drehungen den Gravitationsbeschleunigungsvektor parallel (oder antiparallel) zu der Vertikalachse ausrichten.

Außerdem kann ein Speichern der durch den ersten Winkel und den zweiten Winkel definierten Abgleichdrehung umfasst sein, um eine Transformation zu ermöglichen, so dass Sensorsignale des Beschleunigungssensors im Ruhezustand des Fahrzeuges nur eine Beschleunigung entlang der dritten Beschleunigungsachse anzeigen. Somit wäre der Beschleunigungssensor richtig kalibriert.

Die definierte Transformation muss natürlich nicht zwingenderweise ausgeführt werden. Vielmehr reicht es aus, wenn die entsprechenden Winkel bekannt sind, so dass die entsprechenden Sensorsignale, die von der beispielhaften ESP-Einheit erfasst werden richtig gedeutet werden können. Ein möglicherweise schräger Einbau kann dadurch kompensiert werden. Ebenso können die ermittelten Winkel auch nur dem Zweck dienen, den Fahrer bei einem Überschreiten einer Toleranzabweichung von einem Idealeinbau über einen Fehleinbau zu warnen. Daraufhin kann dann der Einbau überprüft werden.

Das Ermitteln der Orientierung mittels der genannten Winkel ist eine Möglichkeit. Darüber hinaus gibt es mehrere mathematisch äquivalente Möglichkeiten, um eine räumliche Drehung der Sensoreinheit in Bezug auf das Fahrzeug festzustellen und entsprechend zu parametrisieren, so dass der korrekte Einbau festgestellt werden kann bzw. mögliche Neigungen entsprechend kompensiert und die Sensorsignale richtig interpretiert werden können.

Der Beschleunigungssensor kann beispielsweise ein dreidimensionaler (3D) Sensor sein und somit drei unabhängige Beschleunigungswerte für drei Achsen (Richtungen) feststellen. Die genannten Achsen müssen nicht notwendigerweise orthogonal aufeinander stehen, jedoch linear unabhängig voneinander sein. Ein 3D-Beschleunigungssensor kann natürlich durch mehrere unabhängige eindimensionale (1D) und/oder zweidimensionale (2D) Beschleunigungssensoren (die ein oder zwei Beschleunigungen unabhängig messen können) aufgebaut sein.

Bei weiteren Ausführungsbeispielen umfasst das erste Verfahren außerdem ein Erfassen eines Bewegungssignals von zumindest einem Bewegungssensor und ein Feststellen eines Fahrzeugstillstandes (oder eines beschleunigungsfreien Zustandes) basierend auf dem Bewegungssignal.

Die vorliegende Erfindung bezieht sich ebenfalls auf ein zweites Verfahren zum Feststellen einer Einbaurichtung einer ESP-Einheit eines Fahrzeuges, wobei für das Fahrzeug wieder eine Längsachse, eine Querachse und eine Vertikalachse definiert ist.

Die Vertikalachse ist parallel zu einem Erdbeschleunigungsvektor und die Sensoreinheit weist zumindest einen Beschleunigungssensor mit einer vorbestimmten Ausrichtung zur Vertikalachse auf und ist ausgebildet, um Sensorsignale für eine erste Beschleunigungsachse und eine zweite Beschleunigungsachse, die verschieden sind von der Vertikalachse, auszugeben. Das zweite Verfahren umfasst die Schritte:

Erfassen eines Beschleunigungssensorsignals (zweite Sensorsignal) des Beschleunigungssensors in Antwort auf eine Linearbeschleunigung des Fahrzeuges entlang der Längsachse, und Ermitteln der Orientierung der Sensoreinheit in einer Ebene, die durch die Längsachse und Querachse aufgespannt wird, basierend auf dem erfassten Beschleunigungssensorsignal.

Erfindungsgemäß umfassen die Verfahren außerdem ein Ermitteln aus dem zweiten Sensorsignal eines Winkels einer Drehung um die dritte Beschleunigungsachse. Der Winkel ist dadurch definiert, dass die zugehörige Drehung die Linearbeschleunigung des Fahrzeuges parallel oder antiparallel zu der ersten Beschleunigungsachse ausrichtet.

Erfindungsgemäß umfassen die Verfahren weiter ein Speichern der durch den Winkel definierten Kompensationsdrehung, um eine Transformation zu ermöglichen, so dass Sensorsignale des Beschleunigungssensors bei Beschleunigungen entlang der Längsachse des Fahrzeuges nur eine Beschleunigung entlang der ersten Beschleunigungsachse anzeigen.

Die Verfahren werden während einer Geradeausfahrt (bzw. Ruhezustand) des Fahrzeuges ausgeführt. Dies kann jedoch nicht immer sichergestellt werden. Daher umfasst das Fahrzeug einen oder mehrere weitere Sensoren, die eine Drehung von zumindest einem Fahrzeugrad direkt oder indirekt erfassen, um so eine Geschwindigkeit und aus deren zeitlichem Verlauf eine Beschleunigung zu ermitteln. Daher umfassen die Verfahren weiter folgende Schritte: Ermitteln eines Beschleunigungswertes des Fahrzeuges durch Erfassen von Sensorsignalen von dem weiteren Sensor; Ermitteln eines Betrages der Linearbeschleunigung basierend auf dem zweiten Sensorsignal; und Feststellen einer Abweichung des Beschleunigungswertes von dem Betrag der Linearbeschleunigung und Berücksichtigen der Abweichung in dem Schritt des Ermittelns der Orientierung.

Bei weiteren Ausführungsbeispielen umfassen die Verfahren außerdem ein Ausgeben einer Warnung, falls die ermittelte Orientierung der Sensoreinheit einen Fehleinbau signalisiert. Der Fehleinbau kann als eine Abweichung von einem Normzustand definiert werden.

Ausführungsbeispiele umfassen auch ein Speichermedium mit einem darauf gespeicherten Computerprogramm, welches ausgebildet ist, um eine Vorrichtung zu veranlassen, eines der zuvor beschriebenen Verfahren auszuführen, wenn es auf einem Prozessor (Verarbeitungseinheit) läuft. Das Speichermedium kann ein maschinenlesbares Medium sein, das einem Mechanismus zum Speichern oder Übertragen von Daten in einer von einer Maschine (z.B. einem Computer) lesbaren Form beinhalten. Die Vorrichtung kann beispielsweise eine Steuereinheit mit einem Prozessor sein, auf welchem das Computerprogramm läuft.

Die vorliegende Erfindung bezieht sich somit ebenfalls auf eine Vorrichtung zum Feststellen einer Einbaurichtung einer ESP-Einheit, wobei die ESP-Einheit zumindest einen Beschleunigungssensor aufweist und in einem Fahrzeug eingebaut ist. Die Vorrichtung ist beispielsweise die oben genannte Steuereinheit, die das oben beschriebene Verfahren ausführt und die folgende Merkmale umfasst: eine Erfassungseinheit zum Erfassen eines ersten Sensorsignals von dem Beschleunigungssensor in einem beschleunigungsfreien Zustand des Fahrzeuges und/oder eines zweiten Sensorsignals von dem Beschleunigungssensor in Antwort auf eine Linearbeschleunigung des Fahrzeuges. Die Vorrichtung umfasst weiter eine Verarbeitungseinheit zum Ermitteln der Einbaurichtung der ESP-Einheit relativ zu dem Fahrzeug basierend auf dem ersten Sensorsignal und/oder dem zweiten Sensorsignal. Die Speichereinheit dient dem Abspeichern der Resultate (z.B. der ermittelten Winkel).

In der Vorrichtung kann der Beschleunigungssensor der zuvor erwähnte drei-Achsen Beschleunigungssensor sein, der eine vorbestimmte Lage zu einem in dem Fahrzeug verbauten ESP aufweisen kann, so dass die ermittelte Orientierung der Sensoreinheit ebenso die Orientierung des ESP anzeigt. Optional kann der Beschleunigungssensor in dem ESP auch integriert sein und einem gemeinsamen Gehäuse zusammen mit dem ESP untergebracht sein.

Die vorliegende Erfindung bezieht sich auch auf ein Fahrzeug mit einer Sensoreinheit, die zumindest einen Beschleunigungssensor aufweist, und eine zuvor beschriebene Vorrichtung aufweist.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Erfindung auf die spezifischen Ausführungsformen einschränkt, sondern lediglich der Erklärung und dem Verständnis dienen.

Fig. 1A,B   zeigen Flussdiagramme von Verfahren zum Feststellen einer Orientierung einer Sensoreinheit gemäß Ausführungsbeispielen der vorliegenden Erfindung.

Fig. 2   zeigt eine Vorrichtung zum Feststellen einer Orientierung einer Sensoreinheit gemäß Ausführungsbeispielen der vorliegenden Erfindung.

Fig. 3   zeigt eine beispielhaftes Fahrzeug mit eingebauter Sensoreinheit im Fahrzeugstillstand.

Fig. 4   zeigt eine beispielhafte Ausrichtung eines gemessenen Beschleunigungsvektors während des Fahrzeugstillstandes.

Fig. 5   zeigt das Resultat einer Drehung um eine x-Achse.

Fig. 6   zeigt das Resultat einer anschließenden Drehung um eine y-Achse.

Fig. 7   zeigt das Fahrzeug mit einer in der xy-Ebene verdrehten Sensoreinheit.

Fig. 8   zeigt die sich überlagernde Erdbeschleunigung mit einer Fahrzeugbeschleunigung vor einer Kompensation von Verdrehungen.

Fig. 9      zeigt die resultierende Gesamtbeschleunigung nach der Kompensation von Verdrehungen aus einer aufrechten Position.

Fig. 10     zeigt das endgültige Resultat nach Kompensation aller Verdrehungen der Sensoreinheit.

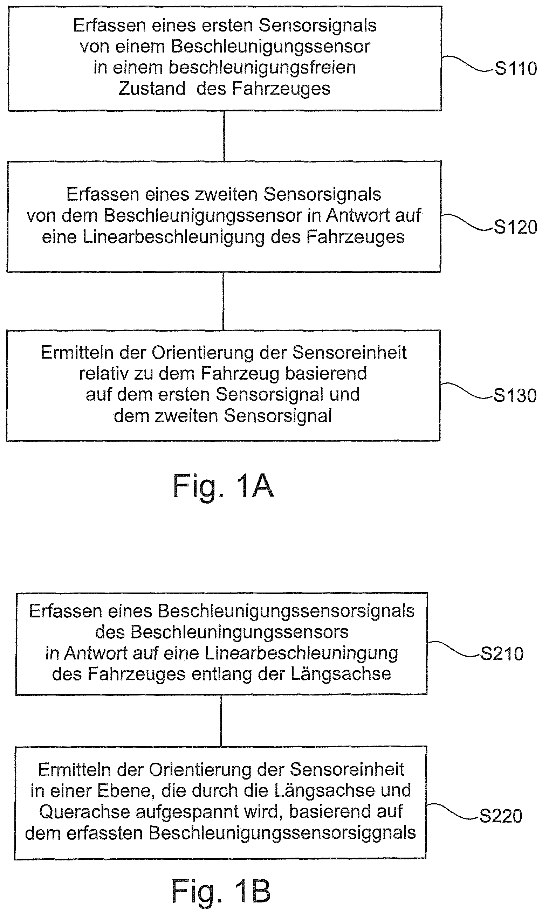

**Fig. 1A,B** zeigen Flussdiagramme von Verfahren zum Feststellen einer Orientierung einer Sensoreinheit gemäß Ausführungsbeispielen der vorliegenden Erfindung.

**Fig. 1A** veranschaulicht ein erstes Verfahren zum Feststellen einer Orientierung einer Sensoreinheit. Die Sensoreinheit weist zumindest einen Beschleunigungssensor auf und ist in einem Fahrzeug eingebaut. Das Verfahren umfasst die Schritte: Erfassen S110 eines ersten Sensorsignals von dem Beschleunigungssensor in einem beschleunigungsfreien Zustand des Fahrzeuges; Erfassen S120 eines zweiten Sensorsignals von dem Beschleunigungssensor in Antwort auf eine Linearbeschleunigung des Fahrzeuges; und Ermitteln S130 der Orientierung der Sensoreinheit relativ zu dem Fahrzeug basierend auf dem ersten Sensorsignal und dem zweiten Sensorsignal.

**Fig. 1B** veranschaulicht ein zweites Verfahren zum Feststellen einer Orientierung einer Sensoreinheit eines Fahrzeuges, wobei das Fahrzeug eine Längsachse, eine Querachse und eine Vertikalachse definiert. Die Vertikalachse liegt parallel zu einem Erdbeschleunigungsvektor (unter der Annahme, dass das Fahrzeug aufrecht steht). Die Sensoreinheit umfasst zumindest einen Beschleunigungssensor und ist ausgebildet, um Sensorsignale (d.h. Beschleunigungswerte) für eine erste Beschleunigungsachse und eine zweite Beschleunigungsachse, die verschieden von der Vertikalachse z sind, auszugeben. Im Unterschied zum ersten Verfahren wird hier vorausgesetzt, dass der Beschleunigungssensor eine vorbestimmte Ausrichtung zur Vertikalachse aufweist. Das zweite Verfahren umfasst die Schritte: Erfassen S210 eines Beschleunigungssensorsignals (zweites Sensorsignal) des Beschleunigungssensors in Antwort auf eine Linearbeschleunigung des Fahrzeuges entlang der Längsachse; und Ermitteln S220 der Orientierung der Sensoreinheit in einer Ebene, die durch die Längsachse und Querachse der Fahrzeugs aufgespannt wird, basierend auf dem erfassten Beschleunigungssensorsignal.

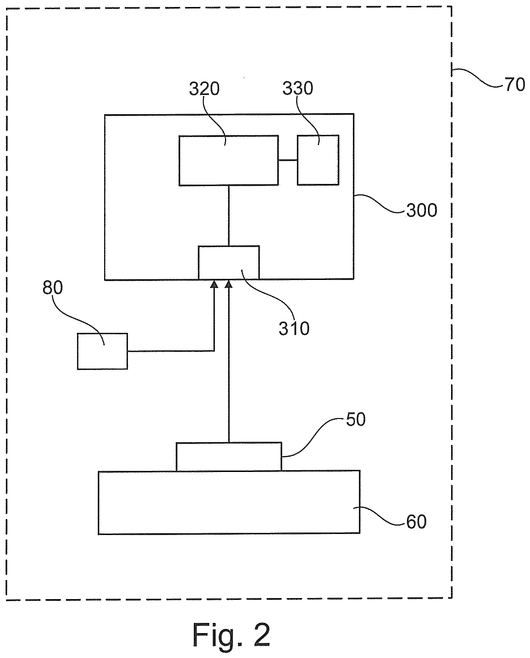

**Fig. 2** zeigt eine Vorrichtung 300 zum Ausführen des ersten und/oder des zweiten Verfahrens, um die Orientierung einer in einem Fahrzeug 70 angebrachten Sensoreinheit 50 festzustellen. Die Vorrichtung 300 umfasst eine Erfassungseinheit 310, eine Verarbeitungseinheit 320 und eine optionale Speichereinheit 330. Die Erfassungseinheit 310 ist ausgebildet, um Sensorsignale von einer Sensoreinheit 50 (z.B. einem Beschleunigungssensor) und optional von einem oder mehreren weiteren Sensoren 80 zu empfangen. Die empfangenen Sensorsignale werden an die Verarbeitungseinheit 320 weitergegeben, wo eine Auswertung der Sensorsignale erfolgt.

Bei der Implementierung des ersten Verfahrens, wertet die Verarbeitungseinheit 320 zwei Messungen aus. In einer Messung wird ein beschleunigungsfreier Zustand (z.B. Ruhezustand) des Fahrzeuges 70 festgestellt und in diesem Zustand die Gravitationsbeschleunigung (insbesondere deren Richtung) durch den Beschleunigungssensor 50 gemessen (als erstes Sensorsignal). Dieses Ergebnis wird genutzt, um eine mögliche Verdrehung der Sensoreinheit 50 aus der aufrechten Position festzustellen. Diese Verdrehung kann über Transformationen (z.B. Drehungen) definiert werden, die den Gravitationsbeschleunigungsvektor entlang der Vertikalachse der Sensoreinheit 50 ausrichten. In einer weiteren Messung wird während einer Linearbeschleunigung des Fahrzeuges entlang der Fahrzeuglängsachse die resultierende Beschleunigung (insbesondere deren Richtung) durch den Beschleunigungssensor 50 gemessen (als zweites Sensorsignal). Dieses Ergebnis wird genutzt, um eine mögliche Verdrehung der Sensoreinheit 50 um die Vertikalachse festzustellen. Diese Verdrehung entspricht jener Drehtransformation, die den erfassten Linearbeschleunigungsvektor in die Richtung der Linearbeschleunigung bringt. Wenn beispielsweise die Linearbeschleunigung entlang der Fahrzeuglängsrichtung erfolgt, ohne dass eine Kurvenfahrt absolviert wird, transformiert die Drehtransformation den gemessenen Beschleunigungsvektor derart, dass er entlang der Fahrzeuglängsachse zeigt.

Der Beschleunigungssensor 50 ist beispielsweise eine Drehraten- und Beschleunigungseinheit, die in einem separaten Gehäuse verpackt sein kann und an einem Fahrzeugrahmen montiert wird. Die Vorrichtung kann beispielsweise ein ESP-Steuergerät sein, an das die Sensoreinheit 50 angeschlossen ist und das die Signale auswertet und somit frühzeitig eine eventuell falsche Einbaulage der Sensoreinheit erkennt.

Die Ermittlung der Verdrehungen kann somit einerseits darauf hindeuten, dass die Sensoreinheit 50 oder die ESP-Einheit 60 falsch in dem Fahrzeug 70 eingebaut wurde. In diesem Fall kann ein entsprechender Warnhinweis ausgegeben werden. Die ermittelte Transformation kann jedoch ebenfalls dazu genutzt werden, um eine Eichung (oder Kalibrierung) der Sensoreinheit 50 oder der ESP-Einheit 60 vorzunehmen, um so die Messgenauigkeit zu erhöhen. In diesem Fall muss nicht unbedingt eine Korrektur des Einbaus vorgenommen werden. Vielmehr kann die Abweichung von dem Idealeinbau automatisch berücksichtigt werden.

Im Unterschied zu konventionellen Verfahren braucht mit dieser Vorgehensweise nur eine kurze Beschleunigungs- oder Abbremsstrecke absolviert werden (beispielsweise vor oder nach einem kurzen Stillstand), um festzustellen, wie die Sensoreinheit 50 in dem Fahrzeug 70 verbaut ist.

Die Sensoreinheit 50 kann beispielsweise als ein dreidimensionaler (oder zwei zweidimensionale) Beschleunigungssensor(en) ausgebildet sein und derart an eine ESP-Einheit 60 koppeln, dass er in einer festen Beziehung (d.h. Orientierung) zu der beispielhaften ESP-Einheit steht. Damit wird es möglich, aus den gemessenen Beschleunigungswerten des Beschleunigungssensors 50 auf eine Orientierung der ESP-Einheit 60 relativ zu dem Fahrzeug 70 zu schließen. Optional ist es ebenfalls möglich, dass der dreidimensionale Beschleunigungssensor 50 Teil der beispielhaften ESP-Einheit 60 ist oder in dieser integriert ist. Beispielsweise kann die ESP-Einheit selbst eine oder mehrere Beschleunigungssensoren umfassen, die in der Lage sind, Sensorsignale zu erzeugen und die Beschleunigungen in drei voneinander verschiedenen Raumrichtungen zu ermitteln. Daher kann die Sensoreinheit 50 auch in einem Steuergerät wie beispielsweise der ESP-Einheit integriert sein, um so die richtige Einbaulage des Steuergeräts automatisch zu ermitteln.

Der Beschleunigungssensor 50 braucht aber nicht zwingerderweise ein dreidimensionaler Beschleunigungssensor zu sein. Er kann ebenfalls als ein zweidimensionaler Beschleunigungssensor ausgebildet sein, so dass er lediglich zwei unabhängige Beschleunigungswerte in Bezug auf zwei unabhängige Raumrichtungen feststellt. Ein solcher Beschleunigungssensor ist ausreichend für die Implementierung des zweiten Verfahrens. In diesem Fall ist es jedoch wichtig, dass der zweidimensionale Beschleunigungssensor 50 derart an die beispielhafte ESP-Einheit 60 koppelt, dass die zwei feststellbaren Beschleunigungswerte nicht parallel oder antiparallel zur Vertikalausrichtung des Fahrzeuges 70 liegen, sondern vorzugsweise in einer Ebene senkrecht dazu liegen. In diesem Fall ist es jedoch für die Kalibrierung der Sensoreinheit 50 weiter wichtig, dass der Einbau der beispielhaften ESP-Einheit 60 oder der Sensoreinheit 50 hinsichtlich der Vertikalrichtung bekannt bzw. vorbestimmt ist, so dass lediglich eine Unbestimmtheit hinsichtlich der Verdrehung um die Vertikalrichtung herum kompensiert werden müsste bzw. festgestellt werden kann. Die Feststellung dieser Verdrehung verläuft auf die gleiche Weise, wie es bei dem ersten Verfahren beschrieben wurde, d.h. über eine Beschleunigungsmessung während einer Linearbeschleunigung des Fahrzeuges und der Feststellung der Richtung des gemessenen Beschleunigungsvektors.

Die weiteren Sensor 80 umfassen beispielsweise zumindest einen Bewegungssensor oder Sensoren, die die Motordrehzahl erfassen oder, die eine Drehung der Räder bzw. deren Drehgeschwindigkeit detektieren. Ebenso können Sensoren vorhanden sein, die einen Lenkeinschlag detektieren und somit auf eine Kurvenfahrt hindeuten. Alle diese weiteren Sensoren sind beispielsweise über die Räder gekoppelt und sprechen auf entsprechende Beschleunigung des Fahrzeuges 70 an, ohne auf die beispielhafte ESP-Einheit 60 zurückzugreifen, die unabhängig von diesen Sensoren 80 ist. Deren Funktion wird weiter unten genauer beschrieben.

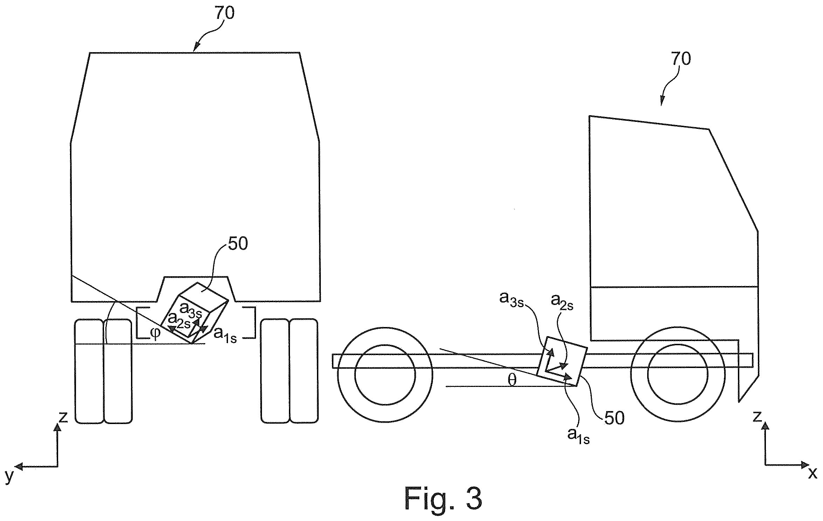

Die **Figuren 3 bis 10** zeigen weitere Details der beispielhaften Vorgehensweise zur Ermittlung der Orientierung der Sensoreinheit 50.

**Fig. 3** zeigt zunächst das Fahrzeug 70 von einer Rückansicht (linke Seite) als auch von einer Seitenansicht (rechte Seite). Das Koordinatensystem ist dabei derart gewählt, dass die x-Achse sich entlang der Fahrzeuglängsrichtung nach vorne erstreckt, die z-Achse die vertikale Richtung und die y-Achse die Fahrzeugquerrichtung darstellt. In dem Fahrzeug ist eine beispielhafte Sensoreinheit 50 gezeigt, die relativ zu dem (globalen) xyz-Koordinatensystem des Fahrzeuges 70 geneigt ist, d.h. das eigene (lokale) Bezugssystem der Sensoreinheit 50 bestehend aus den (orthogonalen) Richtungen $a_{1s}$, $a_{2s}$, $a_{3s}$ ist gegenüber dem globalen xyz-Koordinatensystem verdreht. Beispielsweise kann die Sensoreinheit 50 relativ zu der y-Achse um einen Winkel $\varphi$ und relativ zu der x-Achse um einen Winkel $\theta$ geneigt sein. Der Winkel $\varphi$ ist ebenfalls als Rollwinkel bekannt und der Winkel $\theta$ als sogenannter Nickwinkel. Die Wahl der Achsenrichtung ist weitestgehend frei wählbar, so dass in anderen Koordinatensystemen eine oder mehrere der gezeigten Achsen in eine entgegengesetzte Richtung zeigen oder auch nicht in einem rechten Winkel aufeinander stehen.

Um die Neigung der Sensoreinheit 50 relativ zum Fahrzeug 70 zu ermitteln wird, wie zuvor beschrieben, in einem Messschritt die Ausrichtung des Gravitationsvektors g im unbeschleunigten Zustand (z.B. im Stillstand) ermittelt. Im Folgenden wird vom Stillstand des Fahrzeuges in diesem Messschritt ausgegangen, obwohl die vorliegende Erfindung darauf nicht eingeschränkt ist. Wichtig ist lediglich, dass in diesem Messschritt keine andere, von Gravitationsbeschleunigung g verschiedene Beschleunigung auf das Fahrzeug 70 wirkt.

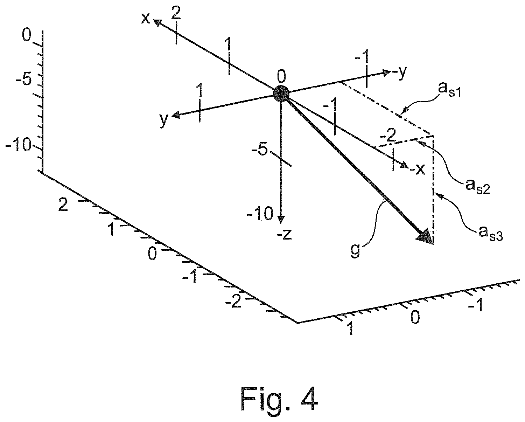

**Fig. 4** zeigt eine beispielhafte Ausrichtung eines gemessenen Gravitationsbeschleunigungsvektors g während des beispielhaften Fahrzeugstillstandes, wie in der Fig. 3 gezeigt wurde. Da sich das Fahrzeug 70 im Stillstand befindet, wirkt lediglich die Gravitationsbeschleunigung g auf das Fahrzeug 70, die von der Sensoreinheit 50 gemessen wird. In dem gezeigten Beispiel ist die Gravitationsbeschleunigung g nicht entlang der negativen z-Achse ausgerichtet, sondern hat einen Wert $a_{s1}$ in der negativen x-Achse, einen Wert $a_{s2}$ in der negativen y-Achse und entlang der negativen z-Achse einen Wert $a_{s3}$.

Der gezeigte Fahrzeugstillstand kann beispielsweise anhand einer Raddrehzahl unter Nutzung entsprechender Sensorsignale oder anderer Fahrzeugmesswerte (wie beispielsweise von einer Feststellbremse, Informationen über einen eingelegten Getriebegang oder dem Motorlauf) festgestellt werden. Hierfür können die zuvor beschriebenen weiteren Sensoren 80 genutzt werden. Es ist ebenfalls möglich, den Stillstand des Fahrzeuges 70 über ESP-Sensorsignale (Drehraten und andere Beschleunigungssignale) zu erkennen.

Im Fahrzeugstillstand wirkt per Definition nur die Gravitationsbeschleunigung g auf das Fahrzeug 70, so dass für die gemessene Beschleunigung die folgende Gleichung gilt:

$$a_{1S}{}^2 + a_{2S}{}^2 + a_{3S}{}^2 = g^2 \; . \tag{1}$$

Um die in der Fig. 3 dargestellte nicht-aufrechte Orientierung der Sensoreinheit 50 bei späteren Messungen entsprechend berücksichtigen zu können (bzw. einen Falscheinbau zu signalisieren), werden in den folgenden Schritten die statischen Rollwinkel und Nickwinkel abgeglichen. Dies bedeutet, dass nach einer Ermittlung dieser Winkel durch entsprechende Kompensationsdrehungen die gemessenen Beschleunigungswerte zunächst in ein Koordinatensystem transformiert werden können, in welchem die Gravitationsbeschleunigung g nur in eine Richtung wirkt, die als senkrechte Richtung definiert werden kann.

Dies kann in zwei Schritten erfolgen. In einem ersten Schritt wird zunächst der gemessene Beschleunigungsvektor um seine x-Achse gedreht, so dass die y-Komponente des gemessenen Beschleunigungsvektors verschwindet. Diese Kompensationsdrehung entspricht der folgenden Transformation:

$$\begin{pmatrix} a_{1x} \\ a_{2x} \\ a_{3x} \end{pmatrix} = \begin{pmatrix} 1 & 0 & 0 \\ 0 & \cos\varphi & -\sin\varphi \\ 0 & \sin\varphi & \cos\varphi \end{pmatrix} \begin{pmatrix} a_1 \\ a_2 \\ a_3 \end{pmatrix} \tag{2}$$

wobei:

$$\sin\varphi = \frac{a_{2S}}{\sqrt{a_{2S}{}^2 + a_{3S}{}^2}} \; . \tag{3}$$

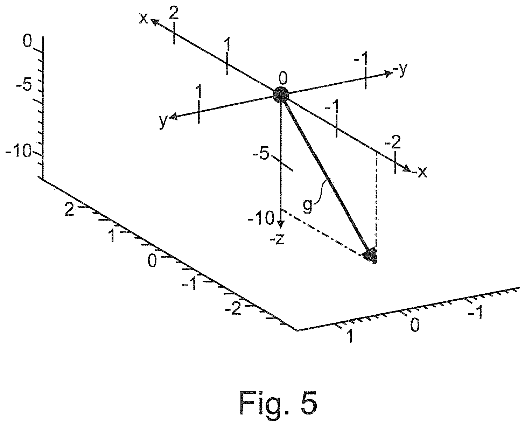

Fig. 5 zeigt das Resultat dieser Drehung, d.h. der gedrehte Beschleunigungsvektor g hat keine Komponente in der y-Achse, sondern lediglich eine z-Komponente und eine x-Komponente.

Als nächster Schritt wird der Vektor der Fig. 5 nochmals gedreht, und zwar um die y-Achse, so dass der resultierende Vektor senkrecht auf der xy-Ebene steht (d.h. parallel ist zur z-Achse). Die hierfür erforderliche Drehung ist wie folgt definiert:

$$\begin{pmatrix} a_{1xy} \\ a_{2xy} \\ a_z \end{pmatrix} = \begin{pmatrix} \cos\theta & 0 & \sin\theta \\ 0 & 1 & 0 \\ -\sin\theta & 0 & \cos\theta \end{pmatrix} \begin{pmatrix} a_{1X} \\ a_{2X} \\ a_{3X} \end{pmatrix} \tag{4}$$

wobei

$$\sin\theta = -\frac{a_{1X}}{\sqrt{a_{1X}{}^2 + a_{3X}{}^2}} \; . \tag{5}$$

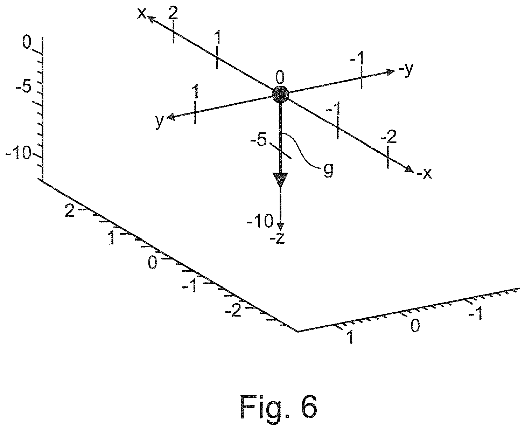

Fig. 6 zeigt das Resultat der beiden Drehungen aus den Glgn. (2) bis (5), in welchem der Beschleunigungsvektor g keine x- und y-Komponente mehr aufweist und parallel zur z-Achse ausgerichtet ist.

Möglicherweise kann die Sensoreinheit 50 jedoch auch noch um einen Winkel $\psi$ um die z-Achse (d.h. in der xy-Ebene) verdreht sein. Im Folgenden wird eine weitere Vorgehensweise beschrieben, wie auch diese Verdrehung feststellbar ist.

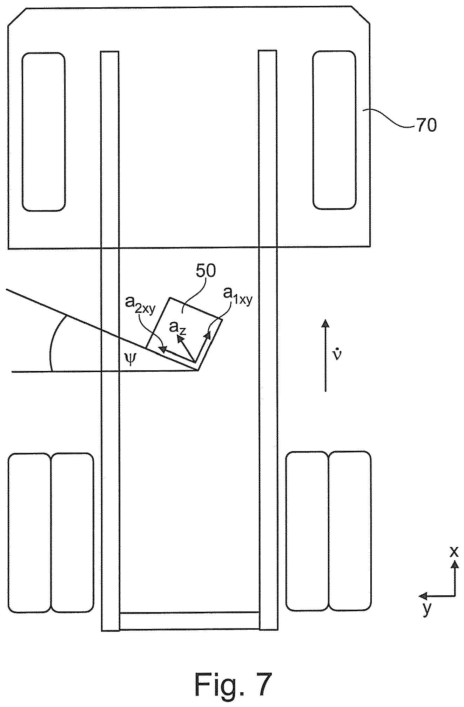

Fig. 7 zeigt zunächst das Fahrzeug 70 in einer Draufsicht, wobei die Sensoreinheit 50 um einen Winkel $\psi$ um die z-Achse (d.h. in der xy-Ebene) gedreht ist. Um diese Verdrehung festzustellen, wird als nächsten Schritt eine Linearbeschleunigung oder Geradeausbeschleunigung des Fahrzeuges 70 durchgeführt, so dass der Beschleunigungsvektor des Fahrzeuges $v$ sich zu der Gravitationsbeschleunigung g addiert und einen Gesamtbeschleunigungsvektor liefert, der durch die Sensoreinheit 50 erfassbar ist.

Optional kann die momentane Geschwindigkeit des Fahrzeuges v beispielsweise aus Raddrehzahlen oder von Winkelgeschwindigkeiten $\omega_1 \dots \omega_n$ ermittelt werden, wobei n die Anzahl von Messungen an verschiedenen Rädern ist ($n \geq 1$). Die Winkelgeschwindigkeiten können beispielsweise mit Raddrehzahlfühlern gemessen werden (am besten an den nicht-angetriebenen Rädern, um einen Schlupf auszuschließen). Wenn die verschiedenen Räder Durchmesser $r_1 \dots r_n$ aufweisen, ergibt sich für die Geschwindigkeit des Fahrzeuges (als Mittelung aus den n Messungen):

$$v_{Fahrzeug} = \frac{\sum_{i=1}^{n} \omega_i \cdot r_i}{n} \tag{6}$$

und dessen momentane Beschleunigung:

$$\dot{v} = \frac{dv_{Fahrzeug}}{dt} \quad . \tag{7}$$

Diese Beschleunigung addiert sich vektoriell zu der zuvor bestimmten Erdbeschleunigung g (siehe Fig. 4). Unter der Annahme, dass die Linearbeschleunigung des Fahrzeuges 70 in x-Richtung ausgeführt wird, wirkt $\dot{v}$ nur in x-Richtung. Der Betrag der Gesamtbeschleunigung (a1, a2, a3) ist somit gegeben durch:

$$a_1^{\,2} + a_2^{\,2} + a_3^{\,2} = g^2 + \dot{v}^2 \quad . \tag{8}$$

Da bei einer Bewegung des Fahrzeugs nicht immer vollständig ausgeschlossen werden kann, dass das Fahrzeug seitlich wegdriftet bzw. Unebenheiten oder Schräglagen des Fahrzeuges zu anderen Beschleunigungswerten führen, kann optional noch anhand von Drehzahlen der angetriebenen Räder ermittelt werden, ob die Beschleunigungswerte tatsächlich mit den gemessenen Werten übereinstimmen.

Hierfür können beispielsweise die oben beschriebenen weiteren Sensoren 80 genutzt werden. Beispielsweise können damit aus einer zeitlichen Abfolge von zusätzlichen Sensorsignalen ermittelt werden, wie sich die Geschwindigkeit der Räder ändert, um daraus den Beschleunigungswert zu ermitteln. Da dieser Beschleunigungswert aus den Drehungen der Räder ermittelt wird, erfasst er nur Geschwindigkeitszunahme des Fahrzeuges 70 relativ zu dem Untergrund und ist nicht sensitiv in Bezug auf Abweichungen von der Linearbeschleunigung. Auf der anderen Seite misst der Beschleunigungssensor 50 die Beschleunigung unabhängig von der Ursache der Beschleunigung, d.h. er misst eine Überlagerung von allen Beschleunigungen (Gravitation, Fahrzeugbeschleunigungen, Kurvenfahrten, Änderung des Untergrundes, etc.). Diese weiteren Sensoren 80 können somit effektiv genutzt werden, um weitere Beschleunigungen zu ermitteln, die die Linearbeschleunigung überlagern und das Ergebnis verfälschen können. Daher kann ebenso festgestellt werden, ob der Untergrund geneigt ist oder ob das Fahrzeug bergab oder berghoch oder seitlich geneigt fährt. Auch Unebenheiten des Untergrunds sind damit feststellbar, die ebenfalls zu einer Verfälschung des Signales führen könnten.

Um dies zu erreichen, kann der Beschleunigungssensor 50 nicht nur die Richtung der Beschleunigung ermitteln, sondern erfasst ebenfalls den Absolutbetrag der Beschleunigung. Wenn das Fahrzeug 70 strikt horizontal und strikt geradlinig beschleunigt wird und wenn eine Abweichung aus der Hochlage bereits berücksichtigt wurde, stimmt der Absolutbetrag der Beschleunigung von dem Beschleunigungssensor 50 mit dem Beschleunigungswert der weiteren Sensoren überein. Wenn es zu einer Abweichung kommt, waren die Messbedingungen nicht ideal. Das Resultat, d.h. die erfasste Abweichung, kann beispielsweise einem Fahrer mitgeteilt werden, so dass er den Test unter anderen Bedingungen wiederholen kann. Es ist ebenfalls möglich, die Abweichung bei der Ermittlung der Orientierung zu berücksichtigen bzw. die Zusatzbeschleunigung zu kompensieren, so dass die Ergebnisse nicht verfälscht werden.

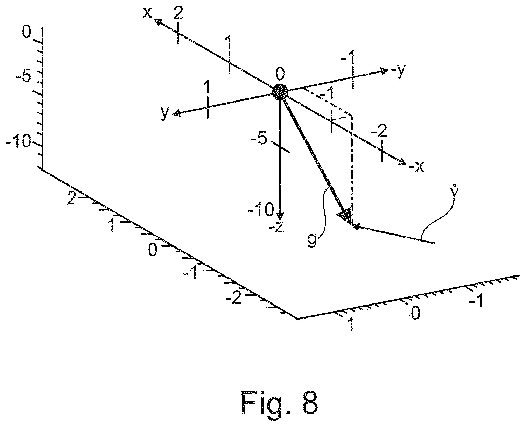

**Fig. 8** zeigt die sich überlagernde Fahrzeugbeschleunigung $\dot{v}$ und die im Ruhestand gemessenen Erdbeschleunigung g.

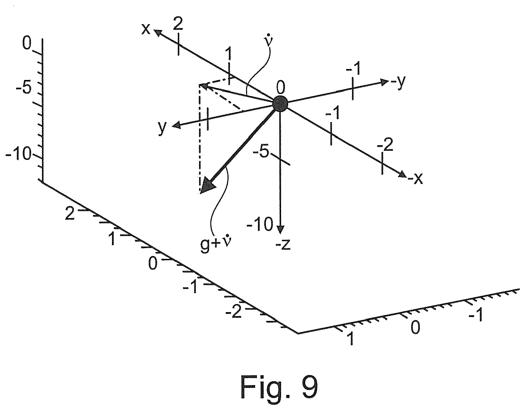

**Fig. 9** zeigt die Gesamtbeschleunigung $g + \dot{v}$ als vektorielle Addition der Gravitationsbeschleunigung g und der Fahrzeugbeschleunigung $\dot{v}$, wobei die bekannten Verdrehungen um die x- und y-Achse bereits berücksichtigt wurde (kompensiert wurde), so dass die Gravitationsbeschleunigung g lediglich entlang der z-Achse wirkt und die effektive Längsbeschleunigung $\dot{v}$ in der xy-Ebene liegt.

Unter der Annahme, dass die Linearbeschleunigung $\dot{v}$ des Fahrzeuges 70 nur eine ax-Beschleunigung definiert (entlang der Fahrzeuglängsachse), ist die Verdrehung um einen Verdrehungswinkel $\psi$ in der xy-Ebene (um die z-Achse herum) durch die folgende Transformation gegeben:

$$\begin{pmatrix} a_x \\ a_y \\ a_z \end{pmatrix} = \begin{pmatrix} \cos\psi & -\sin\psi & 0 \\ \sin\psi & \cos\psi & 0 \\ 0 & 0 & 1 \end{pmatrix} \begin{pmatrix} a_{1xy} \\ a_{2xy} \\ a_z \end{pmatrix} \tag{9}$$

wobei

$$\cos\psi = -\frac{a_{1x}}{\dot{v}} \quad \text{und} \quad \sin\psi = \frac{a_{2X}}{\dot{v}} \tag{10}$$

(unter den obigen Annahme wäre $a_z$ = 0).

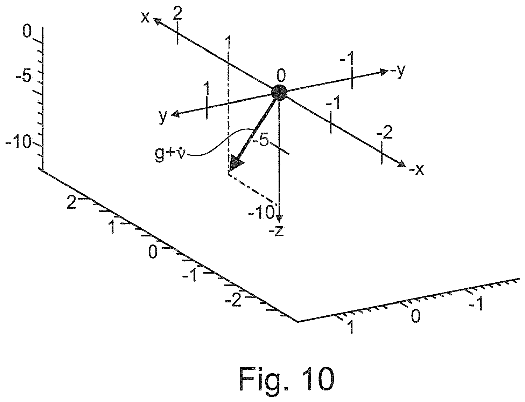

**Fig. 10** zeigt das endgültige Resultat, bei welchem die Komponente $\dot{v}$ nach der vorgenommenen Normierung lediglich entlang der x-Achse ausgerichtet ist. Dementsprechend bewirkt die Linearbeschleunigung eine effektive Verdrehung des Beschleunigungsvektors um die y-Achse herum (d.h. aus der z-Achse heraus).

Zusammenfassend ist es somit möglich, die drei gemessenen Beschleunigungen der Sensoreinheit 50 in die Fahrzeugbeschleunigung im Fahrzeugkoordinatensystem (siehe Fig. 2) durch die folgende Transformation zu transformieren:

$$\begin{pmatrix} a_x \\ a_y \\ a_z \end{pmatrix} = \begin{pmatrix} \cos\psi & -\sin\psi & 0 \\ \sin\psi & \cos\psi & 0 \\ 0 & 0 & 1 \end{pmatrix} \begin{pmatrix} \cos\theta & 0 & \sin\theta \\ 0 & 1 & 0 \\ -\sin\theta & 0 & \cos\theta \end{pmatrix} \begin{pmatrix} 1 & 0 & 0 \\ 0 & \cos\varphi & -\sin\varphi \\ 0 & \sin\varphi & \cos\varphi \end{pmatrix} \begin{pmatrix} a_{S1} \\ a_{S2} \\ a_{S3} \end{pmatrix} \tag{11}$$

Die Winkel $\varphi$ und $\theta$ sind dadurch bestimmt, dass die Gravitationsbeschleunigung g nur entlang der z-Achse ausgerichtet ist, und der Winkel $\psi$ ist dadurch definiert, dass die Fahrzeugbeschleunigung $\dot{v}$ nur eine Komponente entlang der x-Achse aufweist. Aus der bisher dargestellten Vorgehensweise ergibt sich, dass für jede Verdrehung der Sensoreinheit 50 relativ zu dem Fahrzeugkoordinatensystem eine Beschleunigung durch ein entsprechendes Sensorsignal festzustellen ist. Daher ist für eine allgemeine Verdrehung in alle drei Raumrichtungen ein drei-dimensionales oder 3-Achsen Sensorsignal erforderlich, welches sowohl Verdrehungen um den Nickwinkel, um den Rollwinkel als auch Verdrehungen um die vertikale Achse erfassen kann.

Ein solches dreidimensionale Sensorsignal kann von einer Sensoreinheit 50 erzeugt werden, die mit der beispielhaften ESP-Einheit gekoppelt ist, um so eine Orientierung der ESP-Einheit festzustellen. Die ESP-Einheit braucht jedoch selbst keinen dreidimensionalen Beschleunigungssensor aufzuweisen. In diesem Fall kann ein zusätzlicher dreidimensionaler Beschleunigungssensor vorgesehen sein, der eine feste Orientierung in Bezug auf die Sensoreinheit 50 aufweist und zur Kalibrierung der Sensoreinheit 50 nutzbar ist.

Falls jedoch weder die Sensoreinheit 50 noch ein weiterer unabhängiger Beschleunigungssensor alle drei Raumrichtungen erfassen kann, kann ebenfalls ein zweidimensionales Sensorelement genutzt werden, um eine Orientierung der Sensoreinheit 50 festzustellen. Da jedoch bei Nutzung einer zweidimensionalen Sensoreinheit nicht alle drei Raumrichtungen erfassbar sind, ist es für diesen Fall wichtig, dass die Sensoreinheit bereits einen senkrechten Einbau relativ zur Hochachse sicherstellt oder einen vorbestimmten Winkel zur Hochachse aufweist.

Wenn dies gewährleistet ist, können die Schritte bis zur Glg. (5) entfallen, da der Gravitationsvektor g bereits parallel zur z-Achse ausgerichtet ist bzw. aufgrund des fest vorgeschriebenen Winkels entsprechend transformierbar ist. In diesem Fall brauchen lediglich die Schritte, die mit den Glgn (6) bis (10) beschrieben wurden, ausgeführt zu werden.

Falls das zweidimensionale Sensorelement nicht strikt an der z-Achse ausgerichtet ist bzw. das Fahrzeug beim Stillstand beispielsweise geneigt ist (in einer Hanglage), kann diese Abweichung als ein Sensor-Versatz im Stillstand berücksichtigt und entsprechend abgeglichen werden.

Vorteile von Ausführungsbeispielen der vorliegenden Erfindung und deren wesentlichen Aspekte können wie folgt zusammengefasst werden.

Die vorliegende Erfindung ermöglicht die Orientierung einer Sensoreinheit 50 wie beispielsweise eine ESP-Einheit 60 durch die beschriebenen Verfahren schnell und sicher zu prüfen. Es ist ebenfalls möglich, die Sensoreinheit 50 oder deren Ausrichtung ständig zu überwachen (z.B. vor jedem Fahrtantritt oder sogar während der Fahrt), so dass eine Lockerung der Vorschriften hinsichtlich des akkuraten Einbaus möglich wird. Daher ist die beschriebene Vorgehensweise vorteilhaft für eine ständige oder regelmäßige Kontrolle der Orientierung der Sensoreinheit 50. Mit der Feststellung der Orientierung der Sensoren kann sichergestellt werden, dass das ESP ordnungsgemäß funktioniert.

Gemäß der vorliegenden Erfindung werden Beschleunigungen aus einer Sensoreinheit $a_1$, $a_2$ und gegebenenfalls $a_3$, die typischerweise orthogonal zueinander orientiert, in Deckung mit dem Fahrzeugkoordinatensystem ax, ay, az gebracht. Daher wird nicht nur ein Querbeschleunigungssensor verwendet, sondern ein mehrachsiger Beschleunigungssensor. Handelt es sich dabei um einen dreidimensionalen Beschleunigungssensor ist der auf dem Sensor wirkende Beschleunigungsvektor inklusive dem Anteil der Erdbeschleunigung direkt messbar. Beim Fahrzeugstillstand (oder einer monotonen Bewegung mit konstanter Geschwindigkeit) wirkt lediglich die Erdbeschleunigung, so dass bereits vor Fahrtbeginn die Lage der Sensoreinheit 50 zur Längs- und Querachse direkt ermittelt werden kann und bei unzulässigen Abweichungen zur vorgegebenen Richtung eine Warnung ausgegeben werden kann. Eine falsche Einbaulage wird somit bereits vor, bzw. unmittelbar bei Fahrtantritt erkannt und der Fahrer kann rechtzeitig gewarnt werden. Alternative kann eine Abweichung von der idealen Einbaulage toleriert werden, wobei die beschriebene Vorgehensweise der Kalibrierung dient (kompensiert automatisch Abweichungen von der Ideallage).

Eine Verdrehung um die Hochlage kann durch eine kurze Beschleunigung (z.B. Anfahren) detektiert werden. Beim Anfahren, das für das ESP-Steuergerät durch die CAN-Informationen vom Antrieb und/oder die Signale der Raddrehzahlsensoren 80 erkennbar ist, wird durch die mittels eines mindestens 2D-messenden Beschleunigungssensors ermittelte Änderung des Beschleunigungssignals festgestellt, in welche Winkellage um die Hochachse die Sensoreinheit 50 montiert ist. Ist die Verdrehung um die Hochachse bekannt, kann die für ESP relevante Querbeschleunigung aus Betrag und Richtung des Beschleunigungsvektors berechnet werden, oder, wenn eine bestimmte Einbaurichtung um die Hochachse vorgeschrieben ist, eine Warnung ausgegeben werden, wenn diese von der ermittelten Einbaurichtung abweicht.

Hierfür kann die tatsächliche Beschleunigung in Fahrtrichtung des Fahrzeugs ohne Beschleunigungsanteile quer zur Fahrtrichtung (Kurvenfahrt) gemessen werden. Dies ist möglich, indem durch den Lenkwinkelsensor erkannt wird, dass die Lenkung auf geradeaus steht, und aus Signalen (z.B. Motormoment und -drehzahl, Kupplungsstellung, eingelegter Gang) vom Fahrzeug-Kommunikationsbus (z.B. CAN J1939) erkannt wird, dass das Fahrzeug nun aus dem Stand vorwärts beschleunigt wird.

Ausführungsbeispiele der vorliegenden Erfindung erlauben es somit, dass die ESP-Einheit bereits überprüft werden kann, ohne dass eine Kurvenfahrt vorgenommen werden muss, die eventuell bereits einen ESP-Eingriff erforderlich macht. Außerdem ist es möglich, dass eine eventuelle notwendige Fehlerwarnung wegen einer falschen Einbaulage bereits erkannt wird, ohne dass eine erste Kurve zu durchfahren ist.

Mögliche in Fahrtrichtung oder quer dazu schräge Standorte des Fahrzeugs müssen dabei in den erlaubten Grenzen toleriert werden. Allerdings können durch einen 2d- oder 3d-Beschleunigungssensor große Abweichungen um die Hochachse toleriert werden, bzw. eine Vorgabe der Einbaurichtung um die Hochachse kann entfallen.

BEZUGSZEICHENLISTE

| | |
|---|---|
| 50 | Sensoreinheit |
| 60 | ESP-Einheit |
| 70 | Fahrzeug |
| 80 | weitere Sensoren |
| 300 | Vorrichtung zum Feststellen einer Orientierung (Steuereinheit) |
| 310 | Erfassungseinheit |
| 320 | Verarbeitungseinheit |
| 330 | Speichereinheit |
| x, y, z | Längs-, Quer- und Vertikalachse des Fahrzeuges |
| a1 | erste Beschleunigungsachse |
| a2 | zweite Beschleunigungsachse |
| a3 | dritte Beschleunigungsachse |
| g | Erdbeschleunigungsvektor |

**Patentansprüche**

1. Verfahren zum Feststellen einer Einbaurichtung einer ESP, elektronisches Stabilitätsprogramm,-Einheit (50) während einer Geradeausfahrt eines Fahrzeuges (70), wobei die ESP-Einheit (50) zumindest einen Beschleunigungssensor aufweist und in dem Fahrzeug (70) eingebaut ist und das Fahrzeug (70) einen weiteren Sensor (80) umfasst, der eine Drehung von zumindest einem Fahrzeugrad direkt oder indirekt erfasst, **gekennzeichnet durch**

- Erfassen (S110) eines ersten Sensorsignals von dem Beschleunigungssensor in einem beschleunigungfreien Zustand des Fahrzeuges (70), der unter Nutzung des weiteren Sensors (80) festgestellt wird;
- Erfassen (S120) eines zweiten Sensorsignals von dem Beschleunigungssensor in Antwort auf eine Linearbeschleunigung des Fahrzeuges (70);
- Ermitteln eines Beschleunigungswertes des Fahrzeuges (70) durch Erfassen von Sensorsignalen von dem weiteren Sensor (80);
- Ermitteln eines Betrages der Linearbeschleunigung basierend auf dem zweiten Sensorsignal;
- Feststellen einer Abweichung des Beschleunigungswertes von dem Betrag der Linearbeschleunigung; und
- unter Berücksichtigen der Abweichung, Ermitteln (S130) der Einbaurichtung der ESP-Einheit relativ zu dem Fahrzeug (70) basierend auf dem ersten Sensorsignal und dem zweiten Sensorsignal.

2. Verfahren nach Anspruch 1, wobei der Beschleunigungssensor Sensorsignale für eine erste Beschleunigungsachse (a1), eine zweite Beschleunigungsachse (a2) und eine dritte Beschleunigungsachse (a3) ausgibt und das Fahrzeug (70) eine Längsachse (x), eine Querachse (y) und eine Vertikalachse (z) definiert, wobei die Vertikalachse (z) parallel zu einem Erdbeschleunigungsvektor (g) liegt und die Längsachse (x) parallel zu der Linearbeschleunigung liegt, **dadurch gekennzeichnet, dass** der Schritt (S130) des Ermittelns weiter Folgendes umfasst:

- Ermitteln, aus dem ersten Sensorsignal, eines ersten Winkels ($\varphi$) um die Längsachse (x) und eines zweiten Winkels ($\theta$) um die Querachse (y), wobei der erste Winkel ($\varphi$) und der zweite Winkel ($\theta$) zugehörige Drehungen definieren, die den Erdbeschleunigungsvektor (g) parallel oder antiparallel zu der Vertikalachse (a3) drehen; und
- Speichern der durch den ersten Winkel ($\varphi$) und den zweiten Winkel ($\theta$) definierten Abgleichdrehung, um eine Transformation zu ermöglichen, so dass Sensorsignale des Beschleunigungssensors (50) im beschleunigungsfreien Zustand des Fahrzeuges (70) nur eine Beschleunigung entlang der dritten Beschleunigungsachse (a3) anzeigen.

3. Verfahren nach Anspruch 1 oder Anspruch 2, wobei das Fahrzeug (70) zumindest einen Bewegungssensor aufweist, **dadurch gekennzeichnet, dass** das Verfahren weiter Folgendes umfasst:

- Erfassen eines Bewegungssignals von dem zumindest einen Bewegungssensors (80); und
- Feststellen des beschleunigungsfreien Zustandes basierend auf dem Bewegungssignals.

4. Verfahren zum Feststellen einer Einbaurichtung einer ESP-Einheit während einer Geradeausfahrt eines Fahrzeuges (70), wobei das Fahrzeug (70) eine Längsachse (x), eine Querachse (y) und eine Vertikalachse (z) definiert, wobei die Vertikalachse (z) parallel zu einem Erdbeschleunigungsvektor (g) liegt und die ESP-Einheit (50) zumindest einen Beschleunigungssensor aufweist, wobei der Beschleunigungssensor eine vorbestimmte Ausrichtung zur Vertikalachse (z) aufweist und ausgebildet ist, um Sensorsignale für eine erste Beschleunigungsachse (a1) und eine zweite Beschleunigungsachse (a2), die verschieden sind von der Vertikalachse (z), auszugeben, und wobei das Fahrzeug (70) einen weiteren Sensor (80) umfasst, der eine Drehung von zumindest einem Fahrzeugrad direkt oder indirekt erfasst, **mit:**

- Erfassen (S210) eines Sensorsignals des Beschleunigungssensors in Antwort auf eine Linearbeschleunigung des Fahrzeuges (70) entlang der Längsachse (x); und
- Ermitteln (S220) der Einbaurichtung der ESP-Einheit in einer Ebene, die durch die Längsachse (x) und Querachse (y) aufgespannt wird, basierend auf dem erfassten Sensorsignal,

**dadurch gekennzeichnet, dass** der Schritt (S220) des Ermittelns weiter Folgendes umfasst:

- Ermitteln eines Beschleunigungswertes des Fahrzeuges (70) durch Erfassen von weiteren Sensorsignalen von dem weiteren Sensor (80);
- Ermitteln eines Betrages der Linearbeschleunigung basierend auf dem Sensorsignal;
- Feststellen einer Abweichung des Beschleunigungswertes von dem Betrag der Linearbeschleunigung; und
- unter Berücksichtigen der Abweichung, Ermitteln, aus dem Sensorsignal, eines Winkels ($\psi$) um die dritte Beschleunigungsachse (a3), wobei der dritte Winkel ($\psi$) eine zugehörige Drehung definiert, die die Linearbeschleunigung des Fahrzeuges (70) parallel oder antiparallel zu der ersten Beschleunigungsachse (a1) dreht; und
- Speichern der durch den Winkel ($\psi$) definierten Kompensationsdrehung, um eine Transformation zu ermöglichen, so dass Sensorsignale des Beschleunigungssensors (50) bei Beschleunigungen entlang der Längsachse (x) des Fahrzeuges (70) nur eine Beschleunigung entlang der ersten Beschleunigungsachse (a1) anzeigen.

5. Verfahren nach Anspruch 2,
**dadurch gekennzeichnet, dass** der Schritt (S130; 220) des Ermittelns weiter Folgendes umfasst:

- Ermitteln, aus dem zweiten Sensorsignal, eines dritten Winkels ($\psi$) um die dritte Beschleunigungsachse (a3), wobei der dritte Winkel ($\psi$) eine zugehörige Drehung definiert, die die Linearbeschleunigung des Fahrzeuges (70) parallel oder antiparallel zu der ersten Beschleunigungsachse (a1) dreht; und
- Speichern der durch den dritten Winkel ($\psi$) definierten Kompensationsdrehung, um eine Transformation zu ermöglichen, so dass Sensorsignale des Beschleunigungssensors (50) bei Beschleunigungen entlang der Längsachse (x) des Fahrzeuges (70) nur eine Beschleunigung entlang der ersten Beschleunigungsachse (a1) anzeigen.

6. Verfahren nach einem der vorhergehenden Ansprüche,
**dadurch gekennzeichnet, dass** weiter folgender Schritt umfasst ist:
Ausgeben einer Warnung, falls die ermittelte Orientierung der Sensoreinheit (50) einen Fehleinbau signalisiert.

7. Computerprogrammprodukt mit einem darauf gespeicherten Computerprogramm, welches ausgebildet ist, um ein Verfahren nach einem der Ansprüche 1 bis 6 auszuführen, wenn es auf einem Prozessor läuft.

8. Vorrichtung (300) zum Feststellen einer Einbaurichtung einer ESP-Einheit (50) während einer Geradeausfahrt eines Fahrzeuges (70), wobei die ESP-Einheit (50) zumindest einen Beschleunigungssensor aufweist und in dem Fahrzeug (70) eingebaut ist und das Fahrzeug (70) einen weiteren Sensor (80) umfasst, der eine Drehung von zumindest einem Fahrzeugrad direkt oder indirekt erfasst,
**gekennzeichnet durch**

- eine Erfassungseinheit (310) zum Erfassen eines ersten Sensorsignals von dem Beschleunigungssensor in einem beschleunigungsfreien Zustand des Fahrzeuges (70) unter Nutzung des weiteren Sensors (80) und/oder eines zweiten Sensorsignals von dem Beschleunigungssensor in Antwort auf eine Linearbeschleunigung des Fahrzeuges (70); und
- eine Verarbeitungseinheit (320) zum

Ermitteln eines Beschleunigungswertes des Fahrzeuges (70) durch Erfassen von Sensorsignalen von dem weiteren Sensor (80);
Ermitteln eines Betrages der Linearbeschleunigung basierend auf dem zweiten Sensorsignal;
Feststellen einer Abweichung des Beschleunigungswertes von dem Betrag der Linearbeschleunigung; und

- unter Berücksichtigen der Abweichung, Ermitteln der Einbaurichtung der Sensoreinheit relativ zu dem Fahrzeug (70) basierend auf dem ersten Sensorsignal und/oder dem zweiten Sensorsignal.

9. Vorrichtung (300) nach Anspruch 8,

**dadurch gekennzeichnet, dass**
der Beschleunigungssensor (50) ein drei-Achsen Beschleunigungssensor ist, der eine vorbestimmte Lage zu dem ESP aufweist, so dass die ermittelte Orientierung der Sensoreinheit (50) ebenso die Orientierung des ESP anzeigt.

10. Vorrichtung (300) nach Anspruch 8 oder Anspruch 9,

**dadurch gekennzeichnet, dass**
der Beschleunigungssensor (50) in dem ESP integriert ist.

11. Fahrzeug (70) mit einer Sensoreinheit (50), die zumindest einen Beschleunigungssensor aufweist,

**gekennzeichnet durch**

eine Vorrichtung (300) nach einem der Ansprüche 8 bis 10.

**Claims**

1. Method for determining an installation orientation of an ESP, electronic stability program unit (50) during straight-ahead driving of a vehicle (70), wherein the ESP unit (50) comprises at least one acceleration sensor and is installed in the vehicle (70), and the vehicle (70) contains a further sensor (80) which determines a rotation of at least one vehicle wheel directly or indirectly,
   **characterised by**

   — the detection (S110) of a first sensor signal from the acceleration sensor in an acceleration-free condition of the vehicle (70), which is determined using the further sensor (80);
   — the detection (S120) of a second sensor signal from the acceleration sensor in response to a linear acceleration of the vehicle 70);
   — the determination of an acceleration value of the vehicle (70) by detecting sensor signals from the further sensor (80);
   — the determination of a value of the linear acceleration on the basis of the second sensor signal;
   — the determination of a deviation of the acceleration value from the value of the linear acceleration; and
   — having regard to the said deviation, the determination (S130) of the installation orientation of the ESP unit relative to the vehicle (70) on the basis of the first sensor signal and the second sensor signal.

2. Method according to Claim 1, wherein the acceleration sensor emits sensor signals for a first acceleration axis (a1), a second acceleration axis (a2) and a third acceleration axis (a3), and the vehicle (70) defines a longitudinal axis (x), a transverse axis (y) and a vertical axis (z), wherein the vertical axis (z) is parallel to a gravitational acceleration vector (g) and the longitudinal axis (x) is parallel to the linear acceleration,
   **characterised in that** the determination step (S130) also includes the following:

   — the determination, from the first sensor signal, of a first angle ($\varphi$) about the longitudinal axis (x) and a second angle ($\theta$) about the transverse axis (y), wherein the first angle ($\varphi$) and the second angle ($\theta$) define associated rotations which rotate the gravitational acceleration vector (g) parallel or anti-parallel to the vertical axis (a3), and
   — storing of the compensatory rotation defined by the first angle ($\varphi$) and the second angle ($\theta$), in order to enable a transformation so that sensor signals from the acceleration sensor (50) in the acceleration-free condition of the vehicle (70) only indicate an acceleration along the third acceleration axis (a3).

3. Method according to Claims 1 or 2, wherein the vehicle (70) has at least one acceleration sensor,
   **characterised in that** the method also includes the following:

   — the detection of a movement signal from the at least one movement sensor (80); and
   — the determination of the acceleration-free condition on the basis of the movement signal.

4. Method for determining an installation orientation of an ESP unit during straight-ahead driving of a vehicle (70), wherein the vehicle (70) defines a longitudinal axis (x), a transverse axis (y) and a vertical axis (z), wherein the vertical axis is parallel to a gravitational acceleration vector (g) and the ESP unit (50) comprises at least one acceleration sensor, wherein the acceleration sensor has a predetermined orientation relative to the vertical axis (z) and is designed to emit sensor signals for a first acceleration axis (a1) and a second acceleration axis (a2) which are different from the vertical axis (z), and wherein the vehicle (70) comprises a further sensor (80) which determines a rotation of at least one vehicle wheel directly or indirectly,
   **with:**

   — the detection (S210) of a sensor signal from the acceleration sensor in response to a linear acceleration of the vehicle (70) along the longitudinal axis (x); and
   — the determination (S220) of the installation orientation of the ESP unit in a plane extending between the longitudinal axis (x) and the transverse axis (y), on the basis of the sensor signal detected,

   **characterised in that** the determination step (S220) also includes the following:

   — the determination of an acceleration value of the vehicle (70) by detecting further sensor signals from the further sensor (80);

— the determination of a value of the linear acceleration on the basis of the sensor signal;

— the determination of a deviation of the acceleration value from the value of the linear acceleration; and

— having regard to the said deviation, the determination from the sensor signal of an angle ($\psi$) about the third acceleration axis (a3), wherein the angle ($\psi$) defines an associated rotation which rotates the linear acceleration of the vehicle (70) parallel or anti-parallel to the first acceleration axis (a1); and

— storage of the compensatory rotation defined by the angle ($\psi$) in order to enable a transformation, so that in the event of accelerations along the longitudinal axis (x) of the vehicle (70) the sensor signals of the acceleration sensor (50) only indicate an acceleration along the first acceleration axis (a1).

5. Method according to Claim 2,
**characterised in that** the determination step (S130; 220) also includes the following:

— the determination from the second sensor signal of a third angle ($\psi$) about the third acceleration axis (a3), wherein the said third angle ($\psi$) defines an associated rotation which rotates the linear acceleration of the vehicle (70) parallel or anti-parallel to the first acceleration axis (a1); and

— storage of the compensatory rotation defined by the third angle ($\psi$) in order to enable a transformation, so that in the event of accelerations along the longitudinal axis (x) of the vehicle (70) the sensor signals of the acceleration sensor (50) only indicate an acceleration along the first acceleration axis (a1).

6. Method according to any of the preceding claims,
**characterised in that** in addition the following step is included:
the emission of a warning if the orientation of the sensor unit (50) indicates erroneous installation.

7. Computer program product with a computer program stored on it, which is designed to carry out a method according to any of Claims 1 to 6 when the program is run on a processor.

8. Device (300) for determining an installation orientation of an ESP unit (50) during straight-ahead driving of a vehicle (70), wherein the ESP unit (50) comprises at least one acceleration sensor and is installed in the vehicle (70) and the vehicle (70) has a further sensor (80) which detects a rotation of at least one vehicle wheel directly or indirectly,
**characterised by**

— a detection unit (310) for detecting a first sensor signal from the acceleration sensor in an acceleration-free condition of the vehicle (70) using the further sensor (80) and/or a second sensor signal from the acceleration sensor in response to a linear acceleration of the vehicle (70); and

— a processing unit (320) for

determining an acceleration value of the vehicle (70) by detecting sensor signals from the further sensor (80);
determining the value of the linear acceleration on the basis of the second sensor signal;
determining a deviation of the acceleration value from the value of the linear acceleration; and

— having regard to the said deviation, determining the installation orientation of the sensor unit relative to the vehicle (70) on the basis of the first sensor signal and/or the second sensor signal.

9. Device (300) according to Claim 8,

**characterised in that**
the acceleration sensor (50) is a three-axis acceleration sensor which has a predetermined position relative to the ESP, so that the orientation of the sensor unit (50) determined also indicates the orientation of the ESP.

10. Device (300) according to Claims 8 or 9,

**characterised in that**
the acceleration sensor (50) is integrated in the ESP.

11. Vehicle (70) with a sensor unit (50) which comprises at least one acceleration sensor,

**characterised by**

a device (300) according to any of Claims 8 to 10.

**Revendications**

1. Procédé de constatation d'une direction de montage d'une ESP, unité (50) électronique de programme de stabilité, pendant une sortie en ligne droite d'un véhicule (70), dans lequel l'unité (50) ESP a au moins un capteur d'accélération et est insérée dans le véhicule (70) et le véhicule (70) comprend un autre capteur (80), qui détecte directement ou indirectement une rotation d'au moins une roue du véhicule,

   **caractérisé par**

   — la détection (S110) d'un premier signal de capteur par le capteur d'accélération dans un état sans accélération du véhicule (70), qui est constaté en utilisant l'autre capteur (80) ;
   — la détection (S120) d'un deuxième signal de capteur par le capteur d'accélération en réaction à une accélération linéaire du véhicule (70) ;
   — la détermination d'une valeur d'accélération du véhicule (70) par détection de signaux de capteur par l'autre capteur (80) ;
   — la détermination d'un montant de l'accélération linéaire en se basant sur le deuxième signal de capteur ;
   — la constatation d'un écart de la valeur d'accélération au montant de l'accélération linéaire et
   — en tenant compte de l'écart, la détermination (S130) de la direction de montage de l'unité ESP par rapport au véhicule (70) en se basant sur le premier signal de capteur et le deuxième signal de capteur.

2. Procédé suivant la revendication 1, dans lequel le capteur d'accélération émet des signaux de capteur pour un premier axe (a1) d'accélération, un deuxième axe (a2) d'accélération et un troisième axe (a3) d'accélération et le véhicule (70) définit un axe longitudinal, un axe (y) transversal et un axe (z) vertical, l'axe (z) vertical étant parallèle à un vecteur (g) d'accélération de la gravité et l'axe (x) longitudinal étant parallèle à l'accélération linéaire, **caractérisé en ce que** le stade (S130) de la détermination comprend en outre ce qui suit

   — la détermination, à partir du premier signal de capteur, d'un premier angle ($\varphi$) autour de l'axe (x) longitudinal et d'un deuxième angle ($\theta$) autour de l'axe (y) transversal, dans lequel le premier angle ($\varphi$) et le deuxième angle ($\theta$) définissent des rotations propres, qui font tourner le vecteur (g) d'accélération de la gravité parallèlement ou antiparallèlement à l'axe (a3) vertical et
   — la mise en mémoire de la rotation d'égalisation définie par le premier angle ($\varphi$) et le deuxième angle ($\theta$) pour rendre possible une transformation de manière à ce que des signaux du capteur (50) d'accélération indiquent, lorsque le véhicule (70) est sans accélération, seulement une accélération suivant le troisième axe (a3) d'accélération.

3. Procédé suivant la revendication 1 ou la revendication 2, dans lequel le véhicule (70) a au moins un capteur de déplacement **caractérisé en ce que** le procédé comprend en outre ce qui suit :

   — la détection d'un signal de déplacement par le au moins un capteur (80) de déplacement et
   — la constatation de l'état sans accélération en se basant sur le signal de déplacement.

4. Procédé de constatation d'une direction de montage d'une unité ESP pendant une sortie en ligne droite d'un véhicule (70), dans lequel le véhicule (70) définit un axe (x) longitudinal, un axe (y) transversal et un axe (z) vertical, dans lequel l'axe (z) vertical est parallèle à un vecteur (g) d'accélération de la gravité et l'unité (50) ESP a au moins un capteur d'accélération, dans lequel le capteur d'accélération a une orientation déterminée à l'avance par rapport à l'axe (z) vertical et est constitué pour émettre des signaux de capteur pour un premier axe (a1) d'accélération et un deuxième axe (a2) qui sont différents de l'axe (z) vertical et dans lequel le véhicule (70) comprend un autre capteur (80), qui détecte directement ou indirectement une rotation d'au moins une roue du véhicule,

   **comprenant :**

   - la détection (S210) d'un signal du capteur d'accélération en réaction à une accélération linéaire du véhicule (70) suivant l'axe (x) longitudinal et
   - la détermination (S220) de la direction de montage de l'unité ESP dans un plan, qui passe par l'axe (x) longitudinal et l'axe (y) transversal, en se basant sur le signal de capteur qui a été détecté,

   **caractérisé en ce que** le stade (S220) de la détermination comprend en outre ce qui suit :

- la détermination d'une valeur d'accélération du véhicule (70) par détection d'autres signaux de capteur par l'autre capteur (80) ;
- la détermination d'un montant de l'accélération linéaire en se basant sur le signal de capteur ;
- la constatation d'un écart de la valeur d'accélération au montant de l'accélération linéaire et
- en tenant compte de l'écart, la détermination, à partir du signal de capteur, d'un angle (ψ) autour du troisième axe (a3) d'accélération, l'angle (ψ) définissant une rotation propre, qui fait tourner l'accélération linéaire du véhicule (70) parallèlement ou antiparallèlement au premier axe (a1) d'accélération, et
- la mise en mémoire de la rotation de compensation définie par l'angle (ψ) pour permettre une transformation de manière à ce que des signaux du capteur (50) d'accélération indiquent, lors d'accélérations suivant l'axe (x) longitudinal du véhicule (70), seulement une accélération suivant le premier axe (a1) d'accélération.

5. Procédé suivant la revendication 2,
   **caractérisé en ce que** le stade (S130 ; 220) de la détermination comprend en outre ce qui suit :

   - la détermination, à partir du deuxième signal de capteur, d'un troisième angle (ψ) autour du troisième axe (a3) d'accélération, le troisième angle (ψ) définissant une rotation propre, qui fait tourner l'accélération linéaire du véhicule (70) parallèlement ou antiparallèlement au premier axe (a1) d'accélération, et
   - la mise en mémoire de la rotation de compensation définie par le troisième angle (ψ) pour rendre possible une transformation, de manière à ce que les signaux du capteur (50) d'accélération indiquent, pour des accélérations suivant l'axe (x) longitudinal du véhicule (70), seulement une accélération suivant le premier axe (a1) d'accélération.

6. Procédé suivant l'une des revendications précédentes, **caractérisé en ce qu'**il comprend en outre le stade suivant :
   émission d'un avertissement si l'orientation déterminée de l'unité (50) de capteur signale un montage défectueux.

7. Produit de programme d'ordinateur comprenant un programme d'ordinateur, qui y est mis en mémoire et qui est constitué pour effectuer un procédé suivant l'une des revendications 1 à 6 lorsqu'il se déroule sur un processeur.

8. Système (300) de constatation d'une direction de montage d'une unité (50) ESP pendant une sortie en ligne droite d'un véhicule, dans lequel l'unité (50) ESP a au moins un capteur d'accélération et est montée dans le véhicule (70) et le véhicule (70) comprend un autre capteur (80), qui détecte directement et indirectement une rotation d'au moins une roue du véhicule **caractérisé par**

   — une unité (310) de détection pour la détection d'un premier signal de capteur par le capteur d'accélération, alors que le véhicule (70) se trouve dans un état sans accélération, en utilisant l'autre capteur (80), et/ou d'un deuxième signal de capteur par le capteur d'accélération en réaction à une accélération linéaire du véhicule (70) et
   — une unité (320) de traitement pour

      déterminer une valeur d'accélération du véhicule (70) par détection de signaux par l'autre capteur (80) ;
      déterminer un montant de l'accélération linéaire en se basant sur le deuxième signal de capteur ;
      constater un écart de la valeur d'accélération au montant de l'accélération linéaire et,

   — en tenant compte de l'écart, déterminer la direction de montage par l'unité de capteur par rapport au véhicule (70) en se basant sur le premier signal de capteur et/ou le deuxième signal de capteur.

9. Système (300) suivant la revendication 8,

   **caractérisé en ce que**
   le capteur (50) d'accélération est un capteur d'accélération à trois axes, qui a une position déterminée à l'avance par rapport à la ESP de manière à ce que l'orientation déterminée de l'unité (50) de capteur indique également l'orientation de la ESP.

10. Système (300) suivant la revendication 8 ou revendication 9

    **caractérisé en ce que**
    le capteur (50) d'accélération est intégré dans l'ESP.

**11.** Véhicule (70) ayant une unité (50) de capteur, qui a au moins un capteur d'accélération,

**caractérisé par**
un système (300) suivant l'une des revendications 8 à 10.

Erfassen eines ersten Sensorsignals
von einem Beschleunigungssensor
in einem beschleunigungsfreien
Zustand des Fahrzeuges
—S110

Erfassen eines zweiten Sensorsignals
von dem Beschleunigungssensor in Antwort auf
eine Linearbeschleunigung des Fahrzeuges
—S120

Ermitteln der Orientierung der Sensoreinheit
relativ zu dem Fahrzeug basierend
auf dem ersten Sensorsignal und
dem zweiten Sensorsignal
—S130

## Fig. 1A

Erfassen eines Beschleunigungssensorsignals
des Beschleuningungssensors
in Antwort auf eine Linearbeschleuningung
des Fahrzeuges entlang der Längsachse
—S210

Ermitteln der Orientierung der Sensoreinheit
in einer Ebene, die durch die Längsachse und
Querachse aufgespannt wird, basierend auf
dem erfassten Beschleunigungssensorsiggnals
—S220

## Fig. 1B

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1118519 A
- WO 0017607 A

- DE 102005033237 A1
- DE 102011121822 A1